# EUROPÄISCHE PATENTSCHRIFT

(11) **EP 1 262 404 B1**
(45) Veröffentlichungstag und Bekanntmachung des Hinweises auf die Patenterteilung: **12.11.2003**
(21) Anmeldenummer: 02011007.8
(22) Anmeldetag: 17.05.2002
(51) Int. Cl.: B64C 27/615, B64C 3/50

(54) **Tragflügel für ein Luftfahrzeug mit einer vom Staudruck verstellbaren Klappe**
Airfoil for an aircraft with a flap adjustable by ram air pressure
Voilure d'un aéronef avec un volet actionnable par l'air dynamique

(30) Priorität: 01.06.2001 DE 10126927
(43) Veröffentlichungstag der Anmeldung: 04.12.2002
(73) Patentinhaber: EADS Deutschland GmbH, 85521 Ottobrunn (DE)
(72) Erfinder: Müller, Günther, 83558 Maitenbeth (DE); Schneider, Horst, Dr., 82054 Sauerlach (DE)

(56) Entgegenhaltungen:
- DE-A- 3 943 400
- US-A- 5 335 886
- US-B1- 6 168 379

## Beschreibung

Die Erfindung betrifft ein Tragflügel für ein Luftfahrzeug mit verstellbaren Mitteln zur Profilanpassung und einer eine Stellkraft auf diese ausübenden Stelleinrichtung. Ein derartiger Tragflügel ist beispielsweise aus US-B1-6 168 379 bekannt.

Bei Luftfahrzeugen führen starke Änderungen der Anströmgeschwindigkeit an auftriebskrafterzeugenden Profilen zu einer entsprechenden starken Änderung der Auftriebskräfte und regen hierdurch das die auftriebskrafterzeugenden Profile enthaltende mechanische System zu teilweise erheblichen Eigenschwingungen an. Diese Eigenschwingungen senken den Passagierkomfort durch Vibration und Lärm erheblich und es ist ein hohes Maß an technischem Aufwand erforderlich, um diese auf ein akzeptables Maß zu beschränken. Beispielsweise bei einem Hubschrauber, bei dem das auftriebskrafterzeugende Profil in Form des Hubschrauberrotorblattes gegeben ist, schwankt die Anströmgeschwindigkeit des Blattes bei Reiseflug bei Vor- bzw. Rücklauf um etwa des Faktors +/- 2. Derzeit versucht man diese Schwankung durch eine Änderung des Anstellwinkels des Rotorblattes über die Taumelscheibe bei jedem Umlauf zu kompensieren.

Die Aufgabe der Erfindung ist es ein auftriebskrafterzeugendes Profil für ein Luftfahrzeug zu schaffen, bei welchem eine Profilanpassung zum Ausgleich von sich ändernden Auftriebskräften auf einfache und zuverlässige Weise stattfindet.

Diese Aufgabe wird durch den im Anspruch 1 angegebenen Tragflügel gelöst.

Vorteilhafte Weiterbildungen der Erfindung sind in den Unteransprüchen angegeben.

Durch die Erfindung wird ein Tragflügel für ein Luftfahrzeug mit verstellbaren Mitteln zur Profilanpassung und einer eine Stellkraft auf diese ausübenden Stelleinrichtung geschaffen. Erfindungsgemäß ist es vorgesehen, dass Stelleinrichtung vom Staudruck beaufschlagt ist und die Stellkraft abhängig von der Größe des Staudrucks erzeugt.

Durch den erfindungsgemäßen Tragflügel ist es möglich, den Auftrieb des Profils trotz sich ändernder Anströmgeschwindigkeit ohne äußere Steuerkräfte praktisch konstant zu halten.

Gemäß einer bevorzugten Ausführungsform des erfindungsgemäßen Tragflügels ist es vorgesehen, dass die Stelleinrichtung eine vom Staudruck beaufschlagte Fläche umfasst, welche die Stellkraft erzeugt und funktionswirksam mit den Mitteln zur Profilanpassung gekoppelt ist.

Vorzugsweise umfasst die Stelleinrichtung weiterhin ein Federelement, welches der von der vom Staudruck beaufschlagten Fläche erzeugten Stellkraft entgegenwirkt.

Gemäß einer vorteilhaften Weiterbildung der Erfindung ist eine Dämpfungseinrichtung zur Bedämpfung der Bewegung der Mittel zur Profilanpassung vorgesehen.

Gemäß einer bevorzugten Ausführungsform der Erfindung umfasst die Stelleinrichtung eine vom Staudruck beaufschlagte Kammer, wobei die vom Staudruck beaufschlagte Fläche einen Teil der Begrenzung dieser Kammer bildet.

Bei der letztgenannten Ausführungsform ist die vom Staudruck beaufschlagte Fläche insbesondere vorteilhafterweise durch eine Membran gebildet, die bei Zunahme des in der Kammer herrschenden Staudrucks von der Kammer nach außen verschoben wird und die Mittel zur Profilanpassung im Sinne einer Verminderung der Auftriebskraft verstellt.

Eine vorteilhafte Weiterbildung hiervon sieht es vor, dass die Membran ein in einer Längsrichtung ausgedehntes, an einer Längsseite an der vom Staudruck beaufschlagten Kammer festgelegtes und an seiner anderen Längsseite mit den Mitteln zur Profilanpassung gekoppeltes federndes Element ist, welches zwischen seinen beiden Längsseiten konvex zum Inneren der Kammer hin gewölbt ist und bei Zunahme des Staudrucks aus seiner gewölbten Gestalt in eine weniger gewölbte Gestalt verändert wird, wodurch sich der Abstand der beiden Längsseiten der Membran unter Verstellung der Mittel zur Profilanpassung im Sinne einer Verminderung der Auftriebskraft vergrößert.

Eine vorteilhafte Ausführungsform der Erfindung sieht es vor, dass die vom Staudruck beaufschlagte Kammer im Inneren des auftriebskrafterzeugenden Profils ausgebildet ist.

Vorzugsweise sind an der Vorderseite des Profils eine oder mehrere Öffnungen zur Beaufschlagung des Inneren der Kammer mit Staudruck vorgesehen.

Vorzugsweise sind die verstellbaren Mittel zur Profilanpassung durch eine in längs des Profils verlaufende Klappe gebildet und das die Membran bildende längsausgedehnte Element verläuft in Längsrichtung des Profils und ist an seiner einen Längsseite an dem Profil festgelegt und an seiner anderen Längsseite funktionswirksam mit der Klappe gekoppelt.

Die letztgenannte Ausführungsform ist vorteilhafterweise so weitergebildet, dass die Klappe eine Fläche aufweist, welche eine Begrenzung der vom Staudruck beaufschlagten Kammer bildet und über die bei Zunahme des Staudrucks eine Verstellung der Klappe im Sinne einer Verringerung der Auftriebskraft des Profils bewirkt wird.

Die Klappe ist vorzugsweise an einer Seite der die Begrenzung der Kammer bildenden Fläche schwenkbar an dem Profil gelagert und an der anderen Seite mit dem die Membran bildenden längsausgedehnten Element gekoppelt.

Der Tragflügel ist mit Vorteil ein Hubschrauberrotorblatt.

Die Mittel zur Profilanpassung sind gemäß einer bevorzugten Ausführungsform der Erfindung eine Hinterkantenklappe des Hubschrauberrotorblattes.

Gemäß einer anderen bevorzugten Ausführungsform der Erfindung sind die Mittel zur Profilanpassung eine Nasenklappe des Hubschrauberrotorblattes.

Im folgenden wird ein Ausführungsbeispiel der Erfindung anhand der Zeichnung erläutert.

Es zeigt:

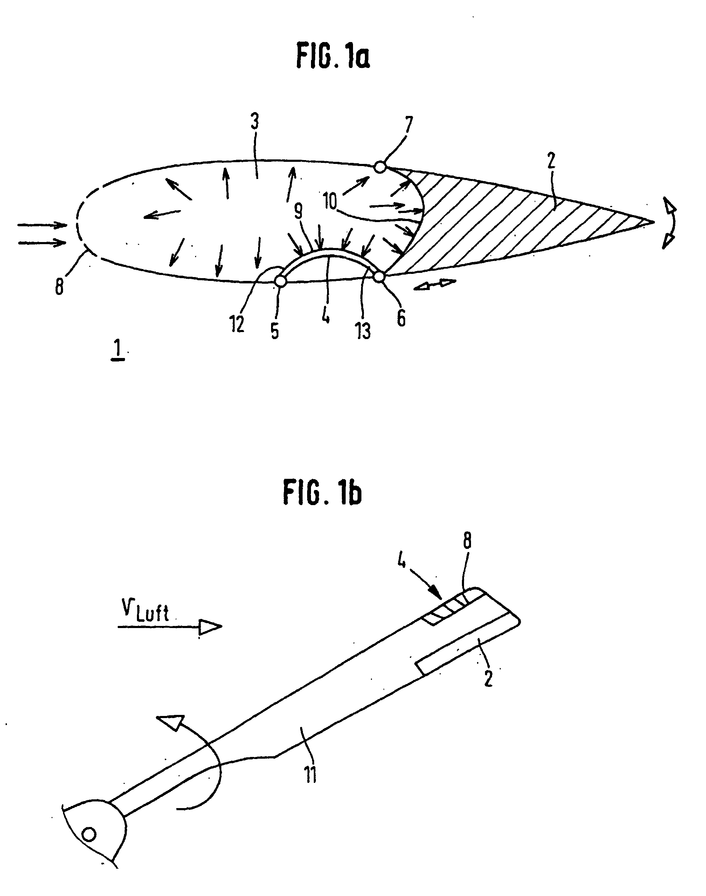

- Fig. 1a): eine schematisierte Querschnittsdarstellung eines Tragflügels für ein Luftfahrzeug mit Mitteln zur Profilanpassung gemäß einem Ausführungsbeispiel der Erfindung; und
- Fig. 1b): eine perspektivische teilweise Ansicht eines Hubschrauberrotorblattes, an welchem die Erfindung gemäß dem in Figur 1a) gezeigtem Ausführungsbeispiel verwirklicht ist.

In Figur 1 ist ein Tragflügel oder auftriebskrafterzeugendes Profil 1 eines Luftfahrzeugs in Form eines Hubschrauberrotorblattes 11 dargestellt. Wie die Schnittdarstellung von Figur 1a) zeigt, ist an dem auftriebskrafterzeugenden Profil 1 eine Klappe 2 in Form einer Hinterkantenklappe angeordnet, welche ein Mittel zur Profilanpassung des Profils 1 im Sinne einer Veränderung der durch dieses erzeugten Auftriebskraft darstellt. 25

Die Klappe 2 ist mittels eines Gelenks 7 an der Oberseite des Profils 1 gelenkig gelagert. Im Inneren des auftriebskrafterzeugenden Profils ist eine Kammer 3 ausgebildet, welche über eine oder mehrere Öffnungen 8, die an der Vorderseite des Profils 1 vorgesehen sind, vom Staudruck beaufschlagt wird.

Ein Teil der Begrenzung dieser vom Staudruck beaufschlagten Kammer 3 wird durch eine Membran 4 gebildet, welche in Form eines federnden Elements vorliegt, das in Längsrichtung des Profils 1 ausgedehnt ist und an seiner einen Längsseite 12 an einem Widerlager 5 an der vom Staudruck beaufschlagten Kammer 3 bzw. an dem Profil 1 festgelegt und an seiner anderen Längsseite 13 über ein Gelenk 6 mit der Klappe 2 funktionswirksam gekoppelt ist. Diese Membran 4 ist zwischen ihren Längsseiten 12, 13 konvex zum Inneren der Kammer 3 hin gewölbt und verändert ihre Form bei Zunahme des Staudrucks aus ihrer gewölbten Gestalt zu einer weniger gewölbten Gestalt hin, wodurch sich der Abstand der beiden Längsseiten 12, 13 der Membran 4 unter gleichzeitiger Verstellung der Klappe 2 im Sinne einer Verminderung der von dem Profil 1 erzeugten Auftriebskraft vergrößert. Die Innenseite der Membran 4 bildet somit eine von dem im Inneren der Kammer 3 herrschenden Staudruck beaufschlagte Fläche, die bei Zunahme des in der Kammer 3 herrschenden Staudrucks nach außen verschoben wird und die Klappe 1 im Sinne einer Verminderung der Auftriebskraft verstellt. Somit wird eine durch eine Erhöhung der Anströmgeschwindigkeit an dem Profil 1 verursachte Zunahme der Auftriebskraft durch eine Verstellung der Klappe 2 kompensiert.

Die federnd ausgebildete Membran 4 bildet gleichzeitig ein Federelement, welches der durch den Staudruck erzeugten Stellkraft entgegenwirkt. Die Membran 4 bildet somit zusammen mit der Klappe 2 ein schwingungsfähiges System. Dieses ist zur Minimierung des Phasenwinkels zur Anregungsfrequenz hin im Sinne einer hohen Reaktionsgeschwindigkeit mit einer hohen Eigenfrequenz ausgelegt und weiterhin ist zur Bedämpfung desselben eine Dämpfungseinrichtung vorgesehen, die in der Figur jedoch nicht eigens dargestellt ist.

Durch das staudruckgesteuerte Profil wird der Auftrieb, z.B. am Rotorblatt, an die jeweilige Anströmgeschwindigkeit angepasst. Die bevorzugt nichtlineare Feder ist so ausgebildet, dass sich durch die erfolgte Profiländerung ein konstanter Auftrieb über den auszulegenden Anströmgeschwindigkeitsbereich ergibt.

Wie aus Figur 1a) ersichtlich ist, hat die Klappe 2 eine dem Profil 1 zugewandte Fläche 10, welche einen Teil der Begrenzung der vom Staudruck beaufschlagten Kammer 3 bildet und die bei Zunahme des Staudrucks ebenfalls eine Verstellung der Klappe 2 im Sinne einer Verringerung der Auftriebskraft des Profils 1 bewirkt. Somit führt eine Vergrößerung des Staudrucks sowohl über die Fläche 9 der Membran 4 als auch über die Fläche 10 der Klappe 2 zu einer Bewegung der letzteren im Sinne einer Verringerung der Auftriebskraft des Profils 1.

Wie Figur 1b) zeigt, ist die vom Staudruck beaufschlagte Kammer 3 zusammen mit der die Auftriebskraft beeinflussenden Klappe 2 bei dem dargestellten Ausführungsbeispiel im Endbereich eines Hubschrauberrotorblattes 11 angeordnet.

Gemäß einer anderen Anwendung können die beschriebenen verstellbaren Mittel zur Profilanpassung aber auch an starren Tragflächen eines Luftfahrzeugs zur Anwendung kommen, um eine starke Veränderung der Auftriebskräfte aufgrund von sich ändernden Anströmgeschwindigkeiten ganz oder teilweise zu kompensieren.

### Bezugszeichenliste

- 1: Profil
- 2: Klappe
- 3: Kammer
- 4: Membran
- 5: Widerlager
- 6: Gelenk
- 7: Gelenk
- 8: Öffnung
- 9: Fläche
- 10: Fläche
- 11: Rotorblatt
- 12: Längsseite
- 13: Längsseite

## Patentansprüche

1. Tragflügel für ein Luftfahrzeug, mit
verstellbaren Mitteln (2) zur Profilanpassung, und
einer Stelleinrichtung, die eine Stellkraft auf die Mittel (2) zur Profilanpassung ausübt,
**dadurch gekennzeichnet,**
**dass** die Stelleinrichtung (3, 4, 5, 6) eine vom Staudruck an der Vorderseite des Tragflügels beaufschlagte Fläche (9, 10) umfasst, welche die Stellkraft abhängig von der Größe des Staudrucks erzeugt.

2. Tragflügel für ein Luftfahrzeug nach Anspruch 1, **dadurch gekennzeichnet, dass** die vom Staudruck beaufschlagte Fläche (9, 10) funktionswirksam mit den Mitteln zur Profilanpassung gekoppelt ist.

3. Tragflügel für ein Luftfahrzeug nach Anspruch 1 oder 2, **dadurch gekennzeichnet, dass** die Stelleinrichtung (3, 4, 5, 6) weiterhin ein Federelement umfasst, welches der von der vom Staudruck beaufschlagten Fläche (9, 10) erzeugten Stellkraft entgegenwirkt.

4. Tragflügel für ein Luftfahrzeug nach einem der vorhergehenden Ansprüche, **dadurch gekennzeichnet, dass** eine Dämpfungseinrichtung zur Bedämpfung der Bewegung der Mittel zur Profilanpassung vorgesehen ist.

5. Tragflügel für ein Luftfahrzeug nach einem der Ansprüche 1 bis 4, **dadurch gekennzeichnet, dass** die Stelleinrichtung (3, 4, 5, 6) eine vom Staudruck beaufschlagte Kammer (3) umfasst, wobei die vom Staudruck beaufschlagte Fläche (9, 10) einen Teil der Begrenzung dieser Kammer (3) bildet.

6. Tragflügel für ein Luftfahrzeug nach Anspruch 5, **dadurch gekennzeichnet, dass** die vom Staudruck beaufschlagte Fläche durch eine Membran (4) gebildet ist, die bei Zunahme des in der Kammer (3) herrschenden Staudrucks von der Kammer (3) nach außen verschoben wird und die Mittel zur Profilanpassung im Sinne einer Verminderung der Auftriebskraft verstellt.

7. Tragflügel für ein Luftfahrzeug nach Anspruch 6, **dadurch gekennzeichnet, dass** die Membran ein in einer Längsrichtung ausgedehntes, an einer Längsseite (12) an der vom Staudruck beaufschlagten Kammer (3) festgelegtes und an seiner anderen Längsseite (13) mit den Mitteln zur Profilanpassung gekoppeltes federndes Element ist, welches zwischen seinen beiden Längsseiten (12, 13) konvex zum Inneren der Kammer (3) hin gewölbt ist und bei Zunahme des Staudrucks aus seiner gewölbten Gestalt in eine weniger gewölbte Gestalt verändert wird, wodurch sich der Abstand der beiden Längsseiten (12, 13) der Membran (4) unter Verstellung der Mittel zur Profilanpassung im Sinne einer Verminderung der Auftriebskraft vergrößert.

8. Tragflügel für ein Luftfahrzeug nach Anspruch 5, 6 oder 7, **dadurch gekennzeichnet, dass** die vom Staudruck beaufschlagte Kammer (3) im Inneren des Tragflügels (1) ausgebildet ist.

9. Tragflügel für ein Luftfahrzeug nach einem der Ansprüche 5 bis 8, **dadurch gekennzeichnet, dass** an der Vorderseite des Profils (1) eine oder mehrere Öffnungen (8) zur Beaufschlagung des Inneren der Kammer (3) mit Staudruck vorgesehen sind.

10. Tragflügel für ein Luftfahrzeug nach Anspruch 7, 8 oder 9, **dadurch gekennzeichnet, dass** die verstellbaren Mittel zur Profilanpassung durch eine längs des Tragflügels (1) verlaufende Klappe (2) gebildet sind, und dass das die Membran (4) bildende längsausgedehnte Element in Längsrichtung des Tragflügels (1) verläuft und an seiner einen Längsseite (12) an dem Tragflügel (1) festgelegt und an seiner anderen Längsseite (13) funktionswirksam mit der Klappe (2) gekoppelt ist.

11. Tragflügel für ein Luftfahrzeug nach Anspruch 10, **dadurch gekennzeichnet, dass** die Klappe (2) eine Fläche (10) aufweist, welche eine Begrenzung der vom Staudruck beaufschlagten Kammer (3) bildet und über die bei Zunahme des Staudrucks eine Verstellung der Klappe (2) im Sinne einer Verringerung der Auftriebskraft des Tragflügels (1) bewirkt wird.

12. Tragflügel für ein Luftfahrzeug nach Anspruch 10 in Verbindung mit Anspruch 11, **dadurch gekennzeichnet, dass** die Klappe (2) an einer Seite der die Begrenzung der Kammer (3) bildenden Fläche (10) schwenkbar an dem Profil (1) gelagert und an der anderen Seite mit dem die Membran (4) bildenden längsausgedehnten Element gekoppelt ist.

13. Tragflügel für ein Luftfahrzeug nach einem der vorhergehenden Ansprüche, **dadurch gekennzeichnet, dass** die Mittel zur Profilanpassung eine Hinterkantenklappe des Tragflügels (11) sind.

14. Tragflügel für ein Luftfahrzeug nach einem der vorhergehenden Ansprüche, **dadurch gekennzeichnet, dass** die Mittel zur Profilanpassung eine Nasenklappe des Tragflügels (11) sind.

## Claims

1. Aerofoil for an aircraft, having
adjustable means (2) for profile adaptation, and
an actuating device which exerts an actuating force on the means (2) for profile adaptation, **characterised in**
**that** the actuating device (3, 4, 5 , 6) comprises a surface (9,10) that is acted upon by ram pressure at the front of the aerofoil and which produces the actuating force in dependence upon the magnitude of the ram pressure.

2. Aerofoil for an aircraft according to claim 1, **characterised in that** the surface (9,10) that is acted upon by ram pressure is operatively coupled to the means for profile adaptation.

3. Aerofoil for an aircraft according to claim 1 or 2, **characterised in that** the actuating device (3, 4, 5, 6) further comprises a spring element which counteracts the actuating force produced by the surface (9, 10) that is acted upon by ram pressure.

4. Aerofoil for an aircraft according to any one of the preceding claims, **characterised in that** a damping device is provided for damping the movement of the means for profile adaptation.

5. Aerofoil for an aircraft according to any one of claims 1 to 4, **characterised in that** the actuating device (3, 4, 5, 6) comprises a chamber (3) which is acted upon by ram pressure, the surface (9,10) that is acted upon by ram pressure forming part of the boundary of that chamber (3).

6. Aerofoil for an aircraft according to claim 5, **characterised in that** the surface that is acted upon by ram pressure is formed by a diaphragm (4) which, when the ram pressure prevailing in the chamber (3) increases, is displaced outward from the chamber (3) and adjusts the means for profile adaptation in such a manner that a reduction in the lifting force is produced.

7. Aerofoil for an aircraft according to claim 6, **characterised in that** the diaphragm is a resilient element which is extended in a longitudinal direction and is fastened at one longitudinal side (12) to the chamber (3) acted upon by ram pressure and is coupled at its other longitudinal side (13) to the means for profile adaptation and which is arched convexly between its two longitudinal sides (12, 13) towards the interior of the chamber (3) and, when the ram pressure increases, is changed from its arched shape into a less arched shape whereby the distance between the two longitudinal sides (12, 13) of the diaphragm (4) becomes greater, the means for profile adaptation thereby being adjusted in such a manner that a reduction in the lifting force is produced.

8. Aerofoil for an aircraft according to claim 5, 6 or 7, **characterised in that** the chamber (3) which is acted upon by ram pressure is formed in the interior of the aerofoil (1).

9. Aerofoil for an aircraft according to any one of claims 5 to 8, **characterised in that** one or more apertures (8) for admitting ram pressure to the interior of the chamber (3) are provided at the front of the profile (1).

10. Aerofoil for an aircraft according to claim 7, 8 or 9, **characterised in that** the adjustable means for profile adaptation are formed by a flap (2) extending along the length of the aerofoil (1), and the longitudinally extended element forming the diaphragm (4) extends in the longitudinal direction of the aerofoil (1) and is fastened at its one longitudinal side (12) to the aerofoil (1) and is operatively coupled at its other longitudinal side (13) to the flap (2).

11. Aerofoil for an aircraft according to claim 10, **characterised in that** the flap (2) has a surface (10) that forms a boundary of the chamber (3) acted upon by ram pressure and which effects adjustment of the flap (2) in such a manner that a reduction in the lifting force of the aerofoil (1) is produced when the ram pressure increases.

12. Aerofoil for an aircraft according to claim 10 in combination with claim 11, **characterised in that** the flap (2) is pivotally arranged on the profile (1) at one side of the surface (10) forming the boundary of the chamber (3) and is coupled at the other side to the longitudinally extended element forming the diaphragm (4).

13. Aerofoil for an aircraft according to any one of the preceding claims, **characterised in that** the means for profile adaptation are a trailing edge flap of the aerofoil (11).

14. Aerofoil for an aircraft according to any one of the preceding claims, **characterised in that** the means for profile adaptation are a leading edge flap of the aerofoil (11).

## Revendications

1. Aile portante pour un aéronef comportant les moyens réglables (2) pour adapter le profil et une installation d'actionnement exerçant une force d'actionnement sur les moyens (2) d'adaptation du profil,
**caractérisée en ce que**
l'installation de réglages (3, 4, 5, 6) comprend une surface (9, 10) sollicitée par la pression dynamique sur le côté avant de l'aile portante et qui génère cette force d'actionnement en fonction de l'amplitude de la pression dynamique.

2. Aile portante d'aéronef selon la revendication 1,
**caractérisée en ce que**
la surface (9, 10) sollicitée par la pression dynamique coopère avec les moyens d'adaptation du profil.

3. Aile portante d'aéronef selon la revendication 1 ou 2,
**caractérisée en ce que**
l'installation d'actionnement (3, 4, 5, 6) comprend en outre un élément élastique s'opposant à la force d'actionnement générée par la surface (9, 10) sollicitée par la pression dynamique.

4. Aile portante d'aéronef selon l'une des revendications précédentes,
**caractérisée par**
une installation d'amortissement pour amortir le mouvement des moyens d'adaptation du profil.

5. Aile portante d'aéronef selon l'une des revendications1 à 4,
**caractérisée en ce que**
l'installation d'actionnement (3, 4, 5, 6) comprend une chambre (3) sollicitée par la pression dynamique et la surface (9, 10) sollicitée par la pression dynamique est une partie délimitant cette chambre (3).

6. Aile portante d'aéronef selon la revendication 5,
**caractérisée en ce que**
la surface sollicitée par la pression dynamique est constituée par une membrane (4) qui, lorsque la pression dynamique régnant dans la chambre (3) augmente, est déplacée vers l'extérieur de la chambre (3) et actionne les moyens d'adaptation du profil dans le sens d'une réduction de la force ascensionnelle.

7. Aile portante d'aéronef selon la revendication 6,
**caractérisée en ce que**
la membrane est un élément élastique s'étendant dans une direction longitudinale et dont un grand côté (12) est fixée à la chambre (3) sollicitée par la pression dynamique et dont l'autre grand côté (13) est couplé au moyen d'adaptation du profil, cet élément élastique étant bombé entre ses deux grands côtés (12, 13) suivant une forme convexe vers l'intérieur de la chambre (3) et lorsque la pression dynamique augmente, cet élément passe de sa forme bombée à une forme moins bombée augmentant ainsi la distance entre les deux grands côtés (12, 13) de la membrane (4) en actionnant le moyen d'adaptation du profil dans le sens d'une réduction de la force ascensionnelle.

8. Aile portante d'aéronef selon les revendications 5, 6, 7,
**caractérisée en ce que**
la. chambre (3) sollicitée par la pression dynamique est réalisée à l'intérieur de l'aile portante (1).

9. Aile portante d'aéronef selon l'une des revendications 5 à 8,
**caractérisée en ce que**
le côté avant du profil (1) comporte une ou plusieurs ouvertures (8) pour fournir la pression dynamique à l'intérieur de la chambre (3).

10. Alle portante d'aéronef selon les revendications 7, 8, 9,
**caractérisée en ce que**
les moyens réglables pour l'adaptation du profil sont constitués par un volet (2) s'étendant le long de l'aile portante (1) et l'élément allongé qui forme la membrane (4) s'étend dans la direction longitudinale de l'aile portante (1) et est fixé par l'un de ses grands côtés (12) à l'aile portante (1), son autre grand côté (13) étant couplé de façon à coopérer avec le volet (12).

11. Aile portante d'aéronef selon la revendication 10,
**caractérisée en ce que**
le volet (2) présente une surface (10) qui constitue une limite de la chambre (3) sollicitée par la pression dynamique et lorsque la pression dynamique augmente, cette surface produit l'actionnement du volet (2) dans le sens d'une réduction de la force ascensionnelle engendrée par l'aile portante (1).

12. Aile portante d'aéronef selon la revendication 10 combinée à la revendication 11.
**caractérisée en ce que**
le volet (2) comporte sur un côté la surface (10) formant la limite de la chambre (3), cette surface étant montée pivotante sur le profil (1) et sur son autre côté le volet est couplé à l'élément allongé formant la membrane (4).

13. Aile portante d'aéronef selon l'une des revendications précédentes.
**caractérisée en ce que**
les moyens d'adaptation du profil sont constitués par un volet de bord de fuite de l'aile portante (11).

14. Aile portante d'aéronef selon l'une des revendications précédentes,
**caractérisée en ce que**
les moyens d'adaptation du profil sont constitués par un volet de bord d'attaque de l'aile portante (11).
